# EUROPÄISCHE PATENTSCHRIFT

(11) **EP 3 607 226 B1**
(45) Veröffentlichungstag und Bekanntmachung des Hinweises auf die Patenterteilung: **15.09.2021**
(21) Anmeldenummer: 17801343.9
(22) Anmeldetag: 13.11.2017
(51) Int. Cl.: F16H 7/12

(54) **RIEMENSPANNVORRICHTUNG**
BELT-TENSIONING DEVICE
DISPOSITIF TENDEUR DE COURROIE

(30) Priorität: 05.04.2017 DE 102017003300
(43) Veröffentlichungstag der Anmeldung: 12.02.2020
(73) Patentinhaber: MTU Friedrichshafen GmbH, 88045 Friedrichshafen (DE)
(72) Erfinder: GROSS, Alexander, 88436 Eberhardzell (DE)
(74) Vertreter: Kordel, Mattias
(86) Internationale Anmeldenummer: PCT/EP2017/001322
(87) Internationale Veröffentlichungsnummer: WO 2018/184651

(56) Entgegenhaltungen:
- WO-A1-03/042578
- DE-A1-102013 002 993
- US-A1- 2016 091 064

## Beschreibung

Die vorliegende Erfindung betrifft eine Riemenspannvorrichtung gemäß Anspruch 1.

Im Stand der Technik sind Riemenspannvorrichtungen der vorliegenden Art bekannt, z.B. aus der Druckschrift US 2015/0031484 A1. Solche Riemenspannvorrichtungen, insbesondere für eine Brennkraftmaschine, z.B. einen Lüfterriementrieb einer solchen, weisen zumeist eine Spannfeder auf, über die ein Schwenkarm mit Andruckrolle mit einer Federkraft beaufschlagt und gegen einen Riemen zu dessen dauerhaftem Spannen gedrängt werden kann. Aufgrund der großen Kräfte, die insbesondere bei Verwendung an Großmotoren von Riemen und Spannfeder ausgehen, ist die Sicherheit sowohl bei Montage als auch im Versagensfall, etwa bei einem Reißen des Riemens im laufenden Betrieb oder bei Federbruch, von großer Bedeutung. Eine Riemenspannvorrichtung gemäß Oberbegriff des Anspruchs 1 geht aus WO 03/042578 A1 hervor.

Ausgehend hiervon löst die vorliegende Erfindung die Aufgabe, eine Riemenspannvorrichtung anzugeben, die geeignet ist, die erforderliche Sicherheit bei Betrieb und Montage vorteilhaft zuverlässig und auf baulich einfache Weise zu gewährleisten.

Diese Aufgabe wird durch eine Riemenspannvorrichtung mit den Merkmalen des Anspruchs 1 gelöst.

Vorteilhafte Weiterbildungen und Ausführungsformen sind in den weiteren Ansprüchen angegeben.

Vorgeschlagen wird erfindungsgemäß eine Riemenspannvorrichtung, welche insbesondere für einen Lüfterriementrieb einer Brennkraftmaschine vorgesehen werden kann, allgemein auch für andere Riementriebe, insbesondere je zur Verwendung mit einer Brennkraftmaschine, bevorzugt einem Großmotor. Ein solcher Großmotor kann z.B. für ein Kraftfahrzeug wie etwa ein Schiff, eine Lok oder ein Nutz- oder Sonderfahrzeug vorgesehen sein, oder zum Beispiel für eine stationäre Einrichtung wie etwa ein Blockheizkraftwerk, ein (Not-)Stromaggregat, z.B. auch für Industrieanwendungen.

Die Riemenspannvorrichtung weist einen Schwenkarm auf, welcher vorzugsweise mit einem Wellenabschnitt bzw. einer Welle und einem Hebelabschnitt, insbesondere einem (Spann-) Hebel, gebildet ist. Hierbei ist der Hebelabschnitt zu dem Wellenabschnitt insbesondere abgewinkelt, z.B. um 90°. Der Schwenkarm kann allgemein ein- oder bevorzugt mehrteilig gebildet sein, bei bevorzugten Ausgestaltungen ist der Spannhebel zum Beispiel an der Welle verschraubt (endseitig; an einem freien Wellenende).

Der Schwenkarm ist im Rahmen der vorliegenden Erfindung drehfederbelastet an einem Lagergehäuse der Riemenspannvorrichtung gelagert. Das Lagergehäuse kann hierbei einen Montage- bzw. Lagersockel aufweisen, allgemein eine Basis, an welchem bzw. welcher eine Aufnahme des Lagergehäuses für die Lagerung des Schwenkarms bereitgestellt ist, insbesondere sich davon wegerstreckend. Die Aufnahme, insbesondere integral mit der Basis gebildet, kann hierbei rohrstückförmig bzw. hohlzylindrisch gebildet sein, insoweit gleichsam einer Lagerbuchse, wobei im Rahmen der vorliegenden Erfindung insbesondere der Wellenabschnitt des Schwenkarms in der Aufnahme drehfederbelastet gelagert ist, insbesondere dreh- bzw. verschwenkbar gelagert.

Zur Drehfederbelastung des Schwenkarms kann eine Spann- bzw. Drehfeder zwischen Lagergehäuse, insbesondere dem Lagersockel, und dem Schwenkarm - dieselben gegeneinander verspannend - gefangen sein, an Letzterem zum Beispiel durch ein Anschlag- bzw. Anlagerelement festgelegt bzw. gefangen sein. Konstruktive Ausgestaltungen gehen insbesondere dahin, die Drehfeder um die Aufnahme des Lagersockels herum anzuordnen, d.h. außenumfangsseitig. Die Drehfeder dient dazu, den Schwenkarm in einer vorgesehenen Schwenkrichtung mit einer Spannrolle gegen einen Riemen (eines Riementriebs) drücken zu können, das heißt um diesen zu spannen. Insbesondere endseitig (an dessen freiem Ende) weist der Schwenkarm bzw. dessen Hebelabschnitt insoweit bevorzugt eine Spannrolle auf. Die Gestalt von Schwenkarm samt Spannrolle ist somit vorzugsweise kurbelförmig.

Die Riemenspannvorrichtung umfasst weiterhin eine Arretiervorrichtung, welche mittels eines ersten und eines zweiten Rastmittels am Schwenkarm sowie einer damit zusammenwirkenden Rastausnehmung (Rastaufnahme) am Lagergehäuse gebildet ist. Die Rastmittel sitzen zum Beispiel - insbesondere je vom Schwenkarm auch lösbar - in einer Halterung am Schwenkarm, insbesondere am Wellenabschnitt, zum Beispiel daran verschraubt. Vorzugsweise ist die Halterung für die Rastmittel am freien Ende des Wellenabschnitts gebildet, d.h. am bzw. vor einem Verbindungsbereich mit dem Hebelabschnitt bzw. in Richtung vom gelagerten zum freien Ende hinter der Drehfeder.

Die Rastausnehmung am Lagergehäuse ist vorzugsweise außenumfangseitig an der Aufnahme desselben gebildet, insbesondere sich über einen Abschnitt in Umfangsrichtung der Aufnahme erstreckend (um die Schwenkachse), z.B. über etwa 45°. Hierbei kann die Halterung der Rastmittel, mithin auch die Rastmittel (in nicht verrastender Stellung), die Aufnahme außenumfangsseitig weiterhin - insbesondere in sämtlichen Schwenkstellungen des Schwenkarms - auch überstreichen, d.h. insoweit auch die Rastausnehmung in Abhängigkeit der Relativdrehstellung. Vorzugsweise ist die Rastausnehmung an einem freien Ende der Aufnahme gebildet, d.h. in Richtung von der Basis zum Verbindungsbereich mit dem Spannhebel bzw. dem freien Ende der Aufnahme betrachtet somit ebenfalls hinter der Drehfeder (wobei die Aufnahme die Drehfeder hierzu bevorzugt überragt).

Im Rahmen der vorliegenden Erfindung ist weiter vorgesehen, dass die Rastmittel für das beabsichtigte Zusammenwirken mit der Rastausnehmung in verschiedenen (vorbestimmten) Schwenkstellungen des Schwenkarms in die Rastausnehmung - mittels rastender Abschnitte - eintauchen können um daran zu verrasten (Einrasten; insbesondere in Rastanschlag an der Rastausnehmung). Für ein Einrasten kann ein jeweiliger rastender Abschnitt hin zur Aufnahme bzw. hin zur Schwenkachse des Schwenkarms verlagert werden bzw. aus der Halterung austauchen. Mit Zurücktauchen in die Halterung kann eine Verrastung mit der Rastausnehmung seitens der Rastmittel gelöst werden (Ausrasten). Vorzugsweise sind das erste und das zweite Rastmittel - insbesondere an der Halterung - in Umfangsrichtung (um die Schwenkachse) zueinander benachbart angeordnet.

Vorzugsweise ist das erste Rastmittel mittels eines federbelasteten Raststifts gebildet, welcher Raststift den Rastabschnitt des ersten Rastmittels bildet. Vorzugsweise ist das erste Rastmittel derart eingerichtet, dass es in eine erste Stellung bringbar ist, in welcher der Raststift federbelastet an einer (der Außenumfangsfläche der Aufnahme zugewandten) Rastseite des ersten Rastmittels austauchen kann und ferner so, dass es in eine zweite Stellung bringbar ist, in welcher der Raststift nicht an der Rastseite des ersten Rastmittels austauchen kann. Vorzugsweise kann das Rastmittel eine jeweilige eingenommene erste oder zweite Stellung hierbei auch selbsttätig halten.

Weiterhin vorzugsweise ist das zweite Rastmittel ein Schraubenelement, insbesondere eine Blockierschraube, wobei ein Endabschnitt der Blockierschraube den Rastabschnitt des zweiten Rastmittels bildet. Denkbar ist jedoch auch, davon verschiedene Rastmittel vorzusehen, oder das erste Rastmittel gleichsam oder gleich dem zweiten Rastmittel auszubilden.

Im Rahmen der erfindungsgemäß vorgeschlagenen Riemenspannvorrichtung ist die Arretiervorrichtung hierbei so konfigurierbar, dass der Schwenkarm mittels der Arretiervorrichtung in verschiedenen vorbestimmten Raststellungen arretierbar und in einer - insbesondere (Riemen-) lastbehafteten - Betriebsstellung mit vorbestimmtem Freiraum verschwenkbar ist (wobei in den vorbestimmten Raststellungen insbesondere je eines der Rastmittel in Rastanschlag an der Rastausnehmung gelangt). Vorzugsweise erfolgt eine Konfiguration der Rastmittel insoweit je durch Nutzereingriff, d.h. zur Verlagerung des jeweiligen Rastabschnitts eines oder beider Rastmittel in die Rastausnehmung oder aus dieser heraus.

Mittels der so geschaffenen Riemenspannvorrichtung wird es auf einfache Weise ermöglicht, sowohl die an einen Riemen zu drängende Spannrolle in Abhängigkeit der Riemenspannung selbsttätig nachzuführen - aufgrund des zugestandenen Freiraums im Betriebsfall - als auch die Sicherheit in jedweder Betriebssituation eines mit der Riemenspannvorrichtung gebildeten Riementriebs zu gewährleisten, d.h. aufgrund zwangsläufig einzunehmender Rastpositionen im Fehlerfall.

Im Rahmen der vorliegenden Erfindung wird weiterhin auch ein Riementrieb mit einer wie oben erörterten Riemenspannvorrichtung vorgeschlagen, insbesondere für einen Lüfter einer Brennkraftmaschine, wobei der Riementrieb einen Riemen aufweist und wobei die Spannrolle bereitgestellt ist, mittels des drehfederbelasteten Schwenkarms, insbesondere in dessen Betriebsstellung, gegen den Riemen denselben spannend gedrängt zu werden.

Bei solch einem mit der Riemenspannvorrichtung gebildeten Riementrieb ist die Arretiervorrichtung bei bevorzugten Ausgestaltungen konfigurierbar, mittels eines der Rastmittel, insbesondere dem ersten Rastmittel (vorzugsweise mittels eines Raststifts desselben) und der Rastausnehmung, den Schwenkarm in einer vorbestimmten (ersten) Rast- bzw. Schwenkstellung zu arretieren, ausgehend von welcher mit Lösen der Arretierung durch das Rastmittel der Schwenkarm die Spannrolle drehfederbelastet gegen den Riemen und somit in die vorgesehene Betriebsposition drängt. Die Schwenkstellung, ausgehend von welcher hierbei die Betriebsposition eingenommen wird, ist insbesondere eine Montagestellung, in welcher eine Riemenmontage ermöglicht ist.

Ferner ist vorzugsweise vorgesehen, dass bei dem mit der Riemenspannvorrichtung gebildeten Riementrieb die Arretiervorrichtung konfigurierbar ist, mittels eines der Rastmittel, insbesondere dem zweiten Rastmittel (vorzugsweise in Form einer Blockierschraube), und der Rastausnehmung den Schwenkarm bei einem Fortfall der Drehfederlast in einer vorbestimmten (zweiten) Rastposition zu arretieren, insbesondere ausgehend von der Betriebsstellung des Schwenkarms und weiterhin auch automatisch. Bricht die Drehfeder zum Beispiel, besteht die Gefahr, dass die Spannrolle im Betriebsfall samt Schwenkarm - seitens des Riemens druckbeaufschlagt - von demselben wegkatapultiert wird, wobei mit der erfindungsgemäßen Ausgestaltung bei einem solchen Verschwenken des Schwenkarms eine vorbestimmte Rastposition durch Verrasten des Rastmittels an der Rastausnehmung einnehmbar ist (Rastanschlag) und die Bewegung des Schwenkarms gestoppt ist.

Weiterhin ist die Arretiervorrichtung eines mit der Riemenspannvorrichtung gebildeten Riementriebs im Rahmen der vorliegenden Erfindung vorzugsweise konfigurierbar, bei einem Fortfall der Belastung der Spannrolle seitens des Riemens, mittels eines der Rastmittel, insbesondere dem zweiten Rastmittel, und der Rastausnehmung den Schwenkarm in einer vorbestimmten (dritten) Rastposition zu arretieren, insbesondere ausgehend von der Betriebsstellung des Schwenkarms und weiterhin auch automatisch. Reißt der Riemen zum Beispiel, besteht die Gefahr, dass die Spannrolle im Betriebsfall samt Schwenkarm - seitens der Drehfeder druckbeaufschlagt - schlagartig in Richtung des Riemens bzw. einer Riemenscheibe verlagert wird, woraufhin mit der erfindungsgemäßen Ausgestaltung mit Verschwenken des Schwenkarms die (weitere vorbestimmte Rastposition durch Verrasten des Rastmittels an der Rastausnehmung einnehmbar ist (Rastanschlag) und die Bewegung des Schwenkarms gestoppt ist.

Zur Ausführung mit einer wie vorstehend erörterten Riemenspannvorrichtung wird auch ein Verfahren vorgeschlagen, bei welchem in einem ersten Schritt der Schwenkarm aus einer Ruhestellung (vorliegend als 0°-Stellung bezeichnet), in welcher die Drehfederlast minimal ist, in eine vorbestimmte Schwenkstellung unter Zunahme der Drehfederlast verschwenkt wird, wobei in dieser Schwenkstellung die Arretiervorrichtung so konfiguriert wird, dass sowohl das erste Rastmittel als auch das zweite Rastmittel an der Rastausnehmung verrastet - bzw. deren Rastabschnitte in die Rastausnehmung daran verrastbar eingebracht werden (mithin die erste Rastposition eingenommen wird). Eine solche erste Rastposition (vorliegend z.B. eine 110°-Stellung) entspricht insbesondere der oben angegebenen Montageposition für eine Riemenmontage.

In Weiterbildung des Verfahrens kann in in einem zweiten Schritt die Arretiervorrichtung so konfiguriert werden, dass das erste Rastmittel nachfolgend aus der Rastausnehmung ausgerastet wird, womit die Betriebstellung des Schwenkarms im Zuge eines Verschwenkens in Richtung des Riemens eingenommen wird (infolge der Drehfederlast), insbesondere derart, dass weder das erste noch das zweite Rastmittel an der Rastausnehmung arretieren. Eine solche Betriebsstellung, in welcher der Schwenkarm gegen den Riemen gedrängt ist und in welcher das zweite Rastmittel vorzugsweise mittig in der Rastausnehmung eingetaucht ist, insbesondere ohne daran zu verrasten bzw. in Rastanschlag zu gelangen (der Schwenkarm somit Bewegungsfreiraum in positiver und negativer Schwenkrichtung erfährt), entspricht zum Beispiel einer 98°-Stellung.

Weiterhin ist im Rahmen des Verfahrens vorgesehen, dass das erste Rastmittel in dem zweiten Schritt nach dem Ausrasten in eine Sperrstellung verbracht wird, in welcher ein selbsttätiges Eintauchen in die Rastausnehmung bzw. Verrasten an der Rastausnehmung unabhängig von einer Schwenkstellung des Schwenkarms verunmöglicht ist. Somit wirkt ausgehend von der Betriebsstellung nachfolgend nur mehr das zweite Rastmittel zur etwaig notwendig werdenden Einnahme jeweiliger - wie oben erörterten - Fehlerfall-Rastpositionen, das heißt bei Reißen des Riemens oder Fortfall der Federlast.

Mit der Erfindung wird auch eine Brennkraftmaschine vorgeschlagen, welche eine wie vorstehend erörterte Riemenspannvorrichtung oder einen wie vorstehend erörterten Riementrieb aufweist, insbesondere auch zur Durchführung des vorgeschlagenen Verfahrens eingerichtet ist.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in verschiedener Kombination bei einer Variante der Erfindung verwirklicht sein.

Bevorzugte Ausführungsformen der Erfindung werden nachfolgend anhand der beigefügten Zeichnungen näher erläutert. Es zeigen:
- Fig. 1: exemplarisch und schematisch in abgebrochener Ansicht eine Riemenspannvorrichtung gemäß einer möglichen Ausführungsform der Erfindung.
- Fig. 2: exemplarisch und schematisch eine Schnittansicht der Riemenspannvorrichtung nach Fig. 1.
- Fig. 3: exemplarisch und schematisch mit a) bis d) verschiedene Ansichten eines ersten Rastmittels einer Riemenspannvorrichtung gemäß einer möglichen Ausführungsform der Erfindung.
- Figuren 4-8: exemplarisch und schematisch Schnittansichten der Riemenspannvorrichtung nach Fig. 1 in verschiedenen Relativstellungen von Schwenkarm und Lagergehäuse sowie je eine zugehörige Ansicht diese Stellung der Riemenspannvorrichtung im Rahmen eines damit gebildeten Riementriebs veranschaulichend.
- Fig. 9: exemplarisch und schematisch eine Ansicht der Riemenspannvorrichtung analog zu Fig. 1 mit einer zusätzlichen Sicherungseinrichtung gemäß einer möglichen Ausführungsform der Erfindung.

In der nachfolgenden Beschreibung und den Zeichnungen entsprechen gleichen Bezugszeichen Elemente gleicher oder vergleichbarer Funktion.

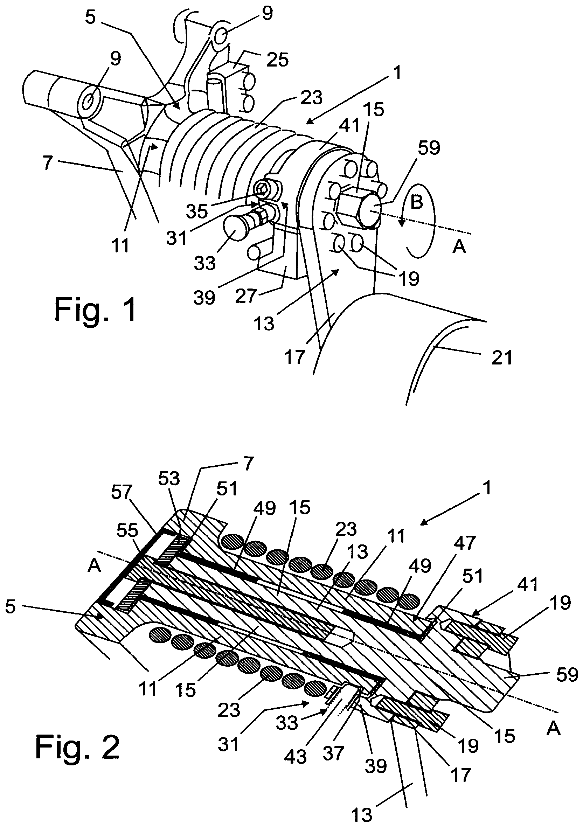

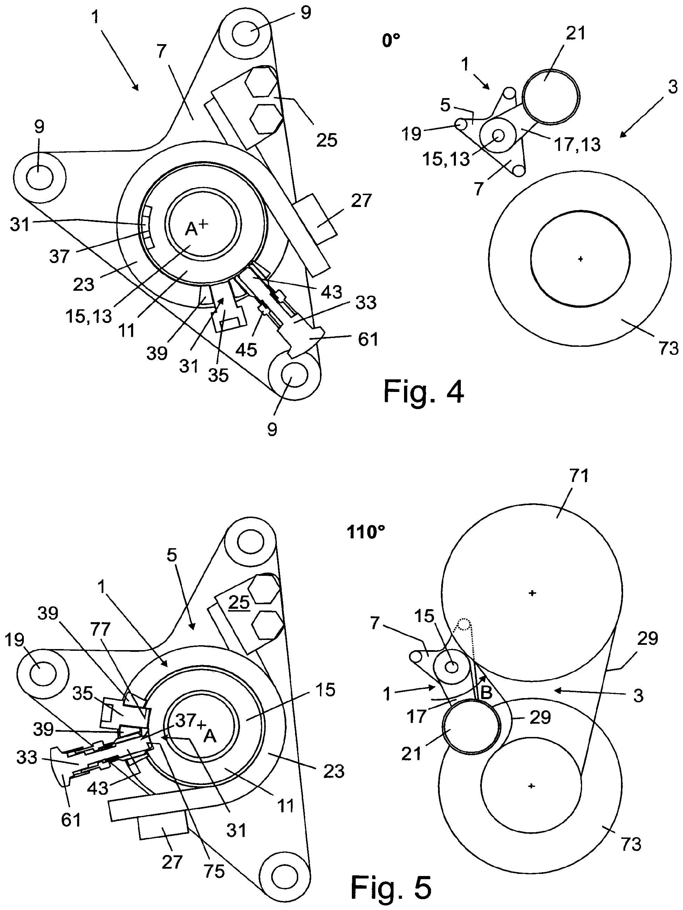

**Fig. 1** zeigt eine Riemenspannvorrichtung 1, insbesondere eines Riementriebs 3 (z.B. Figs. 4 bis 8), weiterhin insbesondere für einen Lüfterriementrieb, vorzugsweise eines Großmotors.

Die Riemenspannvorrichtung 1 weist ein Lagergehäuse 5 auf, welches mit einem Lagersockel bzw. einer Basis 7 gebildet ist, wobei die Basis zur Festlegung an einem Motorblock, z.B. einem Trunnionhalter, über eine Anzahl von Befestigungspunkten vorgesehen ist, z.B. gebildet mittels Schraubaufnahmen 9 am Lagersockel 7, zum Beispiel drei Schraubaufnahmen.

Weiterhin erstreckt sich von der Basis 7 eine Aufnahme 11 weg. Die Aufnahme 11 ist im Wesentlichen hohlzylindrisch bzw. rohrstückförmig und vorliegend auch integral mit der Basis 7 gebildet (siehe ergänzend Fig. 2).

Ein Schwenkarm 13 der Riemenspannvorrichtung 1 umfasst neben einem Wellenabschnitt 15 einen Spannhebel 17, welcher vorliegend über eine Anzahl Befestigungselemente 19, insbesondere Schrauben, an dem Wellenabschnitt 15 des Schwenkarms 13 montiert ist, insbesondere abgewinkelt zu diesem, vorzugsweise um 90°. Insoweit ist der Schwenkarm 13 vorliegend mehrteilig gebildet. An einem freien Ende des Spannhebels 17 ist eine Spannrolle 21 drehbeweglich angeordnet.

Um die Aufnahme 11 herum ist eine Drehfeder 23 angeordnet, welche einenends basisseitig am Lagergehäuse 5 festgelegt ist, zum Beispiel mittels eines - daran verschraubten - Anlagerblocks 25, andernends, zu dem Spannhebel 17 der Riemenspannvorrichtung 1 bzw. deren Schwenkarm 13 benachbart, an einem weiteren Anlagerelement 27 (integral mit dem Wellenabschnitt 15 gebildet) am Wellenabschnitt 15 festgelegt. Mittels der derart gefangenen Drehfeder 23 wird eine Drehwirkung auf den Schwenkarm 13 ausgeübt, welche dazu dient, den Schwenkarm 13 über die daran angeordneten Spannrolle 21 gegen einen Riemen 29 (z.B. Figs. 4 bis 9) zu dessen Spannen drücken zu können, insbesondere selbsttätig nachführend.

Der derart drehfederbelastete Schwenkarm 13 der Riemenspannvorrichtung 1 ist an dem Lagergehäuse 5 mittels der Aufnahme 11 gelagert, das heißt via den darin aufgenommenen Wellenabschnitt 15. Der Wellenabschnitt 15, mithin der Schwenkarm 13, ist über eine Schraubverbindung an dem Lagergehäuse 5, insbesondere dessen Basis 7 festgelegt, insbesondere verschwenkbar gelagert, das heißt um eine Dreh- bzw. Schwenkachse A (auf Details dieser Anordnung wird nachfolgend im Rahmen von Fig. 2 noch näher eingegangen).

Die Riemenspannvorrichtung 1 weist weiterhin eine Arretiervorrichtung 31 auf, welche mittels eines ersten 33 und eines zweiten 35 Rastmittels am Schwenkarm 13 sowie einer damit zusammenwirkenden Rastausnehmung 37, insbesondere in Form eines Langlochs, am Lagergehäuse 5 (in Fig. 1 nicht sichtbar) gebildet ist, wobei die Arretiervorrichtung 31 so konfigurierbar ist, dass der Schwenkarm 13 mittels der Arretiervorrichtung 31 in verschiedenen vorbestimmten Raststellungen (korrespondierend mit vorbestimmten Schwenkstellungen) arretierbar und in einer - (riemen)lastbehafteten - Betriebsstellung mit vorbestimmtem Freiraum verschwenkbar ist. Vorliegend kann die Riemenspannvorrichtung 1 z.B. so konfiguriert werden, dass ein selbsttätiges Arrettieren, insbesondere ausgehend von der Betriebsstellung, in zwei Raststellungen ermöglicht ist, daneben eine Arretierung, insbesondere vor Betriebsaufnahme, in einer weiteren Raststellung, insbesondere durch Nutzereingriff.

Wie Fig. 1 veranschaulicht, sind das erste 33 und das zweite 35 Rastmittel in Umfangsrichtung der Schwenkachse A nebeneinander in einer Halterung 39 aufgenommen, welche endseitig am freien Ende 41 des Wellenabschnitts 15 bzw. benachbart zu dem Spannhebel 17 gebildet ist (in Richtung des Drehfeder 23 weisend), insbesondere integral mit dem Wellenabschnitt 15 gebildet. In einem Drehsinn B der Drehfederwirkung ist hierbei das erste 33 Rastmittel dem zweiten 35 Rastmittel voreilend in der Halterung 39 angeordnet). Die in der Halterung 39 aufgenommenen Rastmittel 33, 35 sind hierbei durch Nutzereingriff lösbar verschraubt, wobei durch einen Nutzereingriff auch Rastabschnitte derselben hinzu oder weg von der Drehachse A des Wellenabschnitts 15 verlagerbar sind, so das unterschiedliche Konfigurationen der Arretiervorrichtung 31 realisierbar sind.

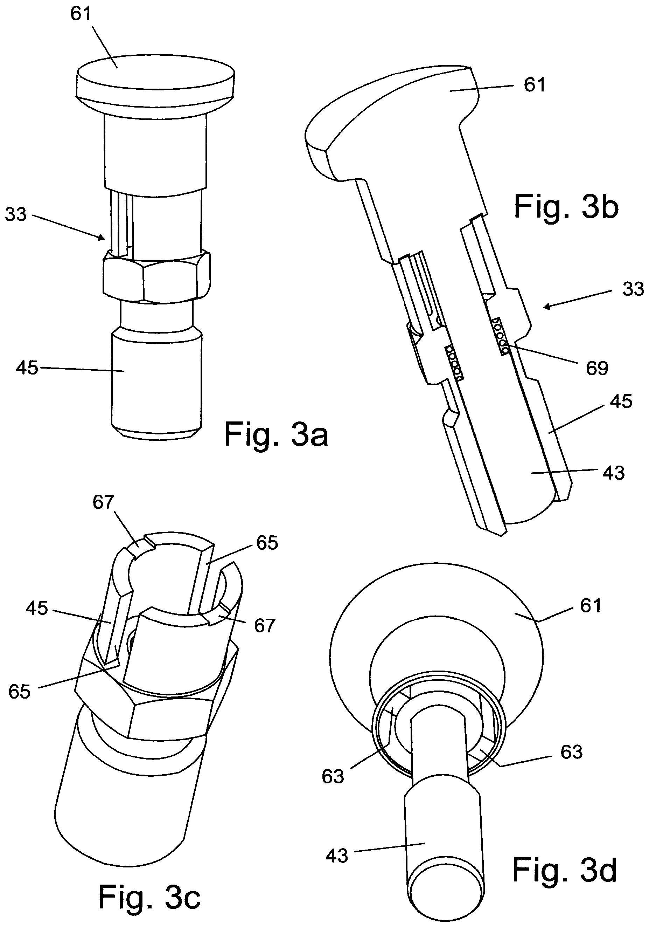

Das erste Rastmittel 33 - s. ergänzend die Figuren 3a bis 3d - ist vorzugsweise mittels eines federbelasteten Raststifts 43 gebildet und kann - wiederum im Rahmen eines Nutzereingriffs - in eine erste und eine zweite Stellung verbracht werden. In der ersten Stellung kann der Raststift 43 des ersten Rastmittels 33 aus einem Gehäuse 45 desselben federbelastet austauchen, insbesondere zur Verrastung an der Rastausnehmung 37 (Rastanschlag), d.h. an einer Rastseite desselben, und mit Erfahren einer gegengerichteten Kraft auch in das Gehäuse 45 zurücktauchen. In der zweiten Stellung (in Fig. 3b veranschaulicht) ist der Raststift 43 in das Gehäuse 45 des ersten Rastmittels 33 zurückgezogen und in dieser Stellung auch fixiert (verriegelt).

Das zweite Rastmittel 35 ist vorzugsweise eine Blockierschraube, welche - durch Nutzereingriff - ein- oder ausdrehbar ist. Ein Rastabschnitt zur Verrastung mit der Rastausnehmung 37 bzw. zur Arretierung (Rastanschlag) daran wird hierbei durch einen gewindeseitigen Endabschnitt der Blockierschraube gebildet. Allgemein sind die Rastmittel 33, 35 insoweit befähigt, via Rastabschnitte in die Rastausnehmung 37 eintauchen oder auch daraus austauchen zu können.

Vorliegend sind das erste 33 und zweite 35 Rastmittel je in der Halterung 39 verschraubt, wobei das erste Rastmittel 33 über sein Gehäuse 45 verschraubt ist, die Blockierschraube über ihr Schraubgewinde.

**Fig. 2** zeigt nunmehr eine Schnittansicht der Riemenspannvorrichtung 1, wobei der Schnitt quer durch die Riemenspannungvorrichtung 1 sowie das erste Rastmittel 33 geführt ist.

Ersichtlich erstreckt sich die Aufnahme 11 - über ihre Länge - durch die Spannfeder 23 hindurch, wobei ein freier Endabschnitt 47 über dieselbe hinausragt, welcher bereitgestellt ist, die Rastausnehmung 37 am Lagergehäuse 5 auszubilden, das heißt vorliegend an der (Außen-) Umfangswandung der Aufnahme 11.

Wie Fig. 2 weiterhin zeigt, bildet der Wellenabschnitt 15 des Schwenkarms 13 weiterhin die Halterung 39 für das erste 33 (und zweite 35) Rastmittel, wobei die Halterung 39 derart angeordnet ist, dass der freie Endabschnitt 47 bzw. die daran gebildete Rastausnehmung 37 von der Halterung 39, mithin den Rastmitteln 33, 35, überstreichbar ist, das heißt im Rahmen einer Überlappung des freien Endabschnitts 47 der Aufnahme 11 und der Halterung 39 (in Richtung hin zur Wellenachse A). Die Halterung 39 ist hierbei an einem flanschförmigen Endabschnitt des Wellenabschnitts 15 gebildet, welcher auch für die Befestigung des Spannhebels 17 via die Schraubelemente 19 vorgesehen ist.

Gelagert ist der Wellenabschnitt 15 in der Aufnahme 11 weiterhin unter Zuhilfenahme von (Trocken-)Gleitlagerbuchsen 49 und zum Beispiel Anlaufscheiben 51, sowie einer Axialscheibe 53, welche gegen die Basis 7 abgestützt ist, wobei eine mit dem Wellenabschnitt verschraubte Schraube 55 die Axialscheibe 53 durchtritt und den Wellenabschnitt 15 über eine korrespondierende Gewindebohrung somit an der Aufnahme 11 drehgelagert festgelegt. Ein Verschlussdeckel 57 verschließt hierbei an der Basis 7. Zur insbesondere einfachen Verdrehung bzw. Verdrehbarkeit des Wellenabschnitts 15 (und zur Verschraubung mit der Schraube 55) ist am Wellenabschnitt 15 endseitig ein Sechskantprofil 59 gebildet.

Die **Figuren 3a bis 3d** veranschaulichen nunmehr eine bevorzugte Ausgestaltung des ersten Rastmittels 33 näher.

Das erste Rastmittel 33 umfasst einen Raststift 43 bzw. Rastbolzen, an welchem nutzereingriffsseitig ein Kopf 61 angeformt ist. Weiterhin umfasst das erste Rastmittel 33 ein Gehäuse 45 mit einem außenumfangseitigen Einschraubgewinde sowie einem Sechskant, welche zur Verschraubung an der Halterung 39 des Wellenabschnitts 15 vorgesehen sind. An dem Raststift 43 sind kopfseitig Radialstege 63 angeformt, welche in Abhängigkeit der Drehstellung des Raststifts 43 relativ zum Gehäuse 45 in erste, tiefere 65 oder zweite, flachere 67 Radialnuten am kopfseitigen Gehäuseende einbring- und verrastbar sind. Hierdurch kann die erste (entriegelte) oder die zweite (verriegelte) Stellung des ersten Rastmittels 33 definiert werden, das heißt nach axialem Auszug aus den jeweiligen ersten 65 oder zweiten 67 Radialnuten durch eine Drehung des Raststifts um 90°.

Ersichtlich ist der Raststift 43 weiterhin durch eine Druckfeder 69, gefangen zwischen Gehäuse 45 und Raststift 43, federbelastet, welche Feder 69 bewirkt, dass der Raststift 43 mit Eintauchen der Radialstege 63 in die tieferen, ersteren Radialnuten 65 federbelastet an der Rastseite zu einem Austauchen gedrängt wird (erste Stellung des Rastmittels 33), das heißt zum Zwecke der Verrastung an der Rastausnehmung 37 des Wellenabschnitts 15. Sind die Radialstege 63 hingegen in die flacheren zweiten Nuten 67 eingerastet, ist ein Austauchen des Raststifts 43 an der Rastseite verhindert (zweite Stellung des Rastmittels 33, Fig. 3b).

Anhand der **Figuren 4 bis 8** werden nunmehr unterschiedliche Konfigurationen der Arretiervorrichtung 31 in Zusammenschau mit den vorbestimmten, einnehmbaren Raststellungen bzw. der vorbestimmten Betriebsstellung der Riemenspannvorrichtung 1 bzw. deren Schwenkarms 13 näher erläutert, insbesondere im Rahmen eines mit der Riemenspannvorrichtung 1 gebildeten Riementriebs 3. Hierbei zeigen die Figuren je linksseitig die Riemenspannvorrichtung 1 in einer Schnittansicht eines Schnitts geführt quer durch die Arretiervorrichtung 31, rechtsseitig die korrespondierende Stellung der Riemenspannvorrichtung 1 im Rahmen des Riementriebs 3.

Anhand dieser Figuren ist insbesondere auch ersichtlich, dass die (Bogen-)Länge der Rastausnehmung 37 insbesondere im Wesentlichen der Abmessung bzw. Länge entspricht, welche die (in Umfangsrichtung) Außenenden der zueinander benachbarten Rastabschnitte der Rastmittel 33, 35 miteinander definieren, wobei die Breite eines jeweiligen Rastabschnitts etwa einem Drittel bis zwei Fünfteln der Länge der Rastausnehmung 37 entspricht, vgl. z.B. Fig. 5

**Fig. 4** zeigt die Riemenspannvorrichtung 1 in einer minimal drehfederbelasteten Schwenkstellung des Wellenabschnitts 15 bzw. des Schwenkarms 13, das heißt in einer entspannten Stellung. Diese Schwenkstellung entspricht zum Beispiel einem Bereitstellungs- bzw. Vormontagezustand, welcher vorliegend z.B. als 0° Stellung mit Bezug auf den Schwenkarm 13 definiert ist. In dieser Schwenkstellung ist die Konfiguration der Arretiervorrichtung 31 derart, dass weder das erste 33 noch das zweite 35 Rastmittel in die Rastausnehmung 37 eintauchbar, mithin auch nicht verrastbar sind. Ersichtlich ist die Blockierschraube hierbei ausgedreht und der Rastbolzen in die zweite, verriegelte Stellung gebracht.

In dieser Schwenkstellung beträgt ein Winkelversatz - jeweils mit Mittenbezug und entgegen dem Uhrzeigersinn betrachtet - zwischen der Rastausnehmung 37 und den Rastmitteln 33, 35 etwa 110°. In dieser Stellung kann die Riemenspannvorrichtung 1 z.B. an dem Motorblock montiert werden, vorzugsweise vor Montage einer den Lüfter antreibenden Riemenscheibe 71 des Riementriebs 3.

**Fig. 5** zeigt nunmehr einen Raststellungszustand der Riemenspannvorrichtung 1, in welchem die Arretiervorrichtung 31 konfiguriert ist, mittels des ersten 33 und des zweiten 35 Rastmittels den Schwenkarm 13 in einer vorbestimmten ersten Schwenkstellung bzw. Rastposition zu arretieren (Verrastung, insbesondere Verriegelung des ersten Rastmittels 33 und des zweiten Rastmittels 35 an der Rastausnehmung 37). Diese Stellung ist vorliegend z.B. als 110°- Stellung - wiederum mit Bezug auf den Schwenkarm 13 - definiert.

Diese durch Verschwenken des Schwenkarms 13 (im Uhrzeigersinn) ausgehend von der 0°-Stellung eingenommene Raststellung entspricht insbesondere einer Stellung, in welcher zum Beispiel eine Riemenmontage am Riementrieb 3 vorgesehen wird. Zur Einnahme dieser Stellung wird das erste Rastmittel 33 zunächst in die erste Stellung gebracht, sodann der Wellenabschnitt 15 im Uhrzeigersinn (gegen den Drehsinn der Federwirkung) verdreht, d.h. über den Sechskant 59, bis der Raststift 43 in der Rastausnehmung 37 selbsttätig einrastet. Unter Beibehalt dieser Stellung wird sodann auch die Blockierschraube eingedreht, wobei auch diese an der Rastausnehmung 37 einrastet. Aufgrund der gleichen Bogenabmessungen der Rastausnehmung 37 und der arretierenden Außenenden der Rastabschnitte der Rastmittel 33, 35, vgl. Fig. 5, ist diese Raststellung somit gegen jedwede Verdrehung gesichert. In dieser Stellung kann nunmehr der Riemen 29 montiert werden, d.h. um die Riemenscheiben 71, 73.

In dieser Raststellung ist das erste Rastmittel 33 insoweit in dessen erste Stellung gebracht, der Raststift 43 in der Folge in die Rastausnehmung 37 unmittelbar benachbart zu einer ersten (im federlastbedingten Drehsinn B voreilenden) Stirnseite 75 eingetaucht. Weiterhin ist auch das zweite Rastmittel 35, d.h. die Blockierschraube in die Rastausnehmung 37 eingetaucht, d.h. eingedreht, und an der nacheilenden Stirnseite 77 in Rastanschlag (obwohl nicht gezeigt, kann vorgesehen werden, für eine noch einfachere Riemenmontage z.B. den Spannhebel 17 soweit vom Wellenabschnitt 15 zu lösen (durch Abschrauben einer Anzahl der Befestigungselemente 19), dass dieser separat vom Wellenabschnitt 15 noch weiter vom Riemen 29 entfernt werden kann, den Spannhebel 17 nach Riemenmontage weiterhin wieder zurück zu verschwenken und wieder mit dem Wellenabschnitt 15 zu verschrauben).

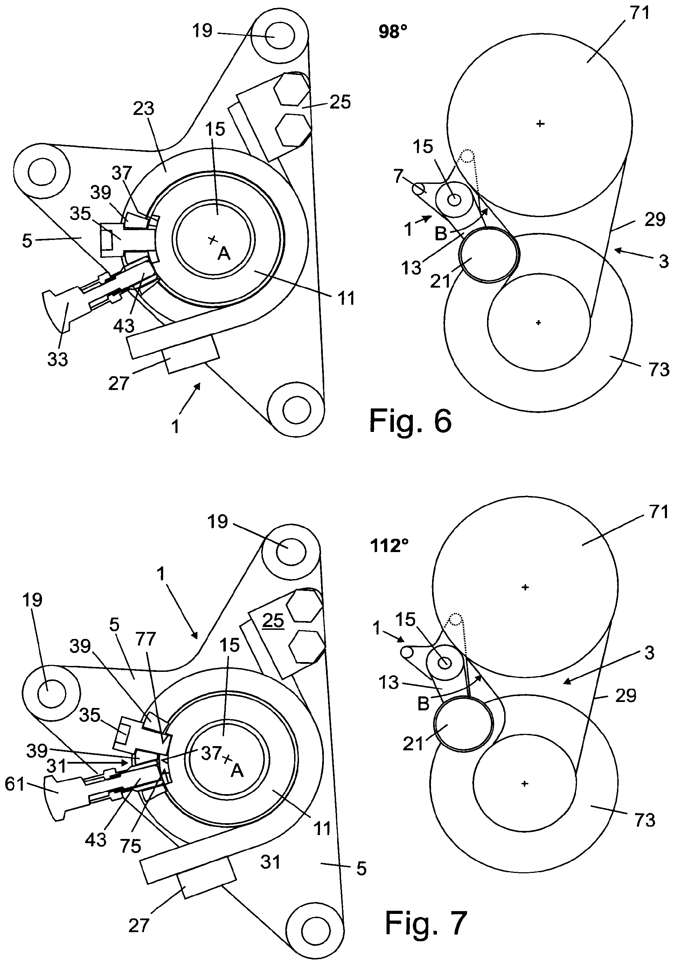

Ausgehend von dieser ersten Rastposition kann der Schwenkarm 13 nunmehr weiterhin samt Spannrolle 21 in die vorgesehene Betriebsposition gebracht werden, d.h. mit Lösen der Arretierung durch das erste Rastmittel 33 (des Raststifts des ersten Rastmittels 33) und dabei einwirkender Riemenlast auf die Spannrolle 21. Hierfür wird lediglich das erste Rastmittel 33 ausgezogen und in die zweite Stellung verbracht. In der Folge schwenkt der Schwenkarm 13 drehfeder- und riemenbelastet in die in Fig. 6 veranschaulichte Betriebsstellung, in welcher die Spannrolle 21 insoweit drehfederbelastet gegen den Riemen 29 des Riementriebs 3 gedrängt ist.

**Fig. 6** veranschaulicht nunmehr die oben erwähnte Betriebsstellung, welche mit Bezug auf den Schwenkarm 13 vorliegend z.B. als 98°-Stellung definiert ist. Ersichtlich ist der Raststift 43 des ersten Rastmittels 33 in das Gehäuse 45 zurückgezogen und der Rastabschnitt des zweiten Rastmittels 35 befindet sich eingetaucht in die Rastausnehmung 37 inmitten derselben, so dass dem Schwenkarm 13 vorbestimmter Freiraum bei einem Verschwenken zum Zwecke des selbsttätigen Nachführens - aber auch entgegen gesetzt dazu - zugestanden ist. Der Freiraum kann z.B. ±5° Schwenkwinkel betragen.

In der Betriebsstellung beträgt ein Winkelversatz - jeweils mit Mittenbezug und gegen den Uhrzeigersinn betrachtet - zwischen den Rastmitteln 33, 35 und der Rastausnehmung 37 z.B. etwa 12°.

**Fig. 7** zeigt nunmehr den Riementrieb 3 in einer zweiten vorbestimmten Rastposition des Schwenkarms 13 der Riemenspannvorrichtung 1, welche z.B. einem Fehlerfall entsprechend einem Fortfall der Drehfederlast entspricht, insbesondere bei einem Bruch der Drehfeder 23 während des Betriebes. Die Konfiguration der Arretiervorrichtung 31 entspricht hierbei jener der Betriebsstellung, d.h. nur das zweite Rastmittel 35 ist in die Rastausnehmung 37 eingetaucht, wobei nunmehr jedoch das zweite Rastmittel 35 auch in Rastanschlag gelangt, d.h. an der (im federlastbedingten Drehsinn nacheilenden) Stirnseite 77 der Rastausnehmung 37, so dass die unkontrollierte Bewegung des Schwenkarms 13 - infolge des Wegkatapultierens seitens der Riemenlast - in entgegengesetzter Richtung des Riemens 29 gestoppt und diese Raststellung gehalten wird. Diese Stellung ist vorliegend z.B. als 112°-Stellung mit Bezug auf den Schwenkarm 13 definiert.

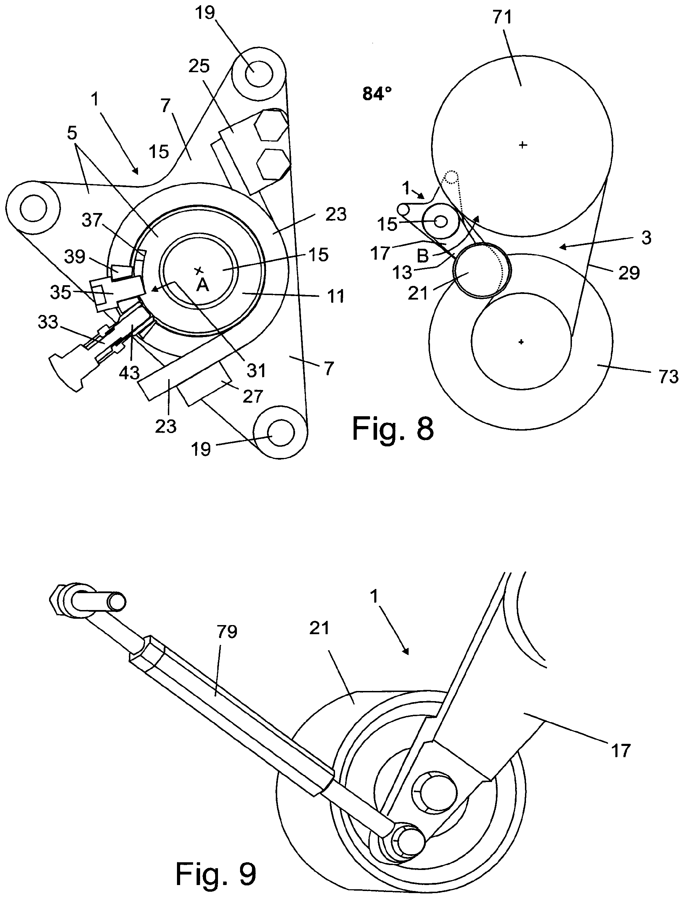

**Fig. 8** zeigt nunmehr den Riementrieb 3 in einer dritten vorbestimmten Rastposition des Schwenkarms 13 der Riemenspannvorrichtung 1, welche z.B. einem Fehlerfall entsprechend einem Fortfall der Belastung der Spannrolle 21 seitens des Riemens 29 entspricht, d.h. bei einem Reißen des Riemens 29 während des Betriebes. Die Konfiguration der Arretiervorrichtung 31 entspricht hierbei wiederum jener der Betriebsstellung, d.h. nur das zweite Rastmittel 35 ist in die Rastausnehmung 37 eingetaucht, wobei das zweite Rastmittel 35 auch wiederum in Rastanschlag gelangt, hierbei jedoch an der (im federlastbedingten Drehsinn voreilenden) Stirnseite 75 der Rastausnehmung 37, so dass die unkontrollierte Bewegung des Schwenkarms 13 - infolge des Riemenreißens - in Richtung des Riemens 29 gestoppt und diese Raststellung gehalten wird. Diese Stellung ist vorliegend z.B. als 84°-Stellung mit Bezug auf den Schwenkarm 13 definiert.

**Fig. 9** veranschaulicht weiterhin die Riemenspannvorrichtung 1 gemäß einer weiteren möglichen Ausgestaltung der Erfindung, wobei ein optionaler Zugarm 79 mit dem Spannhebel 17 verbunden ist, welcher andernends am Motorblock festlegbar ist. Falls die Drehfeder 23 bricht, kann der Zugarm 79 die Spannrolle 21 weiterhin gegen den Riemen 29 drängen, d.h. als Rückfalllösung.

## Patentansprüche

1. Riemenspannvorrichtung (1), insbesondere für eine Brennkraftmaschine, mit:
- einem Schwenkarm (13), drehfederbelastet gelagert an einem Lagergehäuse (5) der Riemenspannvorrichtung (1), wobei an dem Schwenkarm (13) weiterhin eine Spannrolle (21) angeordnet ist, **gekennzeichnet durch**
- eine Arretiervorrichtung (31), gebildet mittels eines ersten (33) und eines zweiten (35) Rastmittels am Schwenkarm (13) sowie einer damit zusammenwirkenden Rastausnehmung (37) am Lagergehäuse (5), wobei die Arretiervorrichtung (31) so konfiguriert ist, dass der Schwenkarm (13) mittels der Arretiervorrichtung (31) in verschiedenen vorbestimmten Raststellungen arretierbar und in einer Betriebsstellung mit vorbestimmtem Freiraum verschwenkbar ist.

2. Riemenspannvorrichung (1) nach Anspruch 1,
**dadurch gekennzeichnet, dass**
- die Arretiervorrichtung (31) so konfiguriert ist, dass zur Arretierung in den verschiedenen vorbestimmten Raststellungen des Schwenkarms (13) das erste und auch das zweite Rastmittel (35) an der Rastausnehmung (37) verrastbar sind.

3. Riemenspannvorrichtung (1) nach einem der vorhergehenden Ansprüche,
**dadurch gekennzeichnet, dass**
- das erste (33) und das zweite (35) Rastmittel an einer Halterung (39) am Schwenkarm (13) in Schwenkrichtung desselben zueinander benachbart angeordnet sind, wobei sich auch die Rastausnehmung (37) in Schwenkrichtung erstreckt, insbesondere als Langloch.

4. Riemenspannvorrichtung (1) nach einem der vorhergehenden Ansprüche,
**dadurch gekennzeichnet, dass**
- das erste Rastmittel (33) mittels eines federbelasteten Raststifts (43) und eines Gehäuses (45) gebildet ist, insbesondere derart, dass das erste Rastmittel (33) in eine erste Stellung bringbar ist, in welcher ersten Stellung der Raststift (43) federbelastet aus dem Gehäuse (45) an einer Rastseite des Gehäuses (45) austauchen kann und das erste Rastmittel (33) ferner in eine zweite Stellung bringbar ist, in welcher der Raststift (43) nicht an der Rastseite des Gehäuses (45) austauchen kann.

5. Riemenspannvorrichtung (1) nach einem der vorhergehenden Ansprüche,
**dadurch gekennzeichnet, dass**
- das zweite Rastmittel (35) eine Blockierschraube ist.

6. Riementrieb (3) mit einer Riemenspannvorrichtung (1) nach einem der vorhergehenden Ansprüche, insbesondere für einen Lüfter einer Brennkraftmaschine, wobei der Riementrieb (3) einen Riemen (29) aufweist, wobei die Spannrolle (21) bereitgestellt ist, mittels des drehfederbelasteten Schwenkarms (13) gegen den Riemen (29) denselben spannend gedrängt zu werden.

7. Riementrieb (3) nach Anspruch 6,
**dadurch gekennzeichnet, dass**
- die Arretiervorrichtung (31) konfiguriert ist, um mittels der Rastmittel (33, 35) und der Rastausnehmung (37) den Schwenkarm (13) in einer vorbestimmten ersten Schwenkstellung zu arretieren, ausgehend von welcher mit Lösen der Arretierung durch die Rastmittel (33, 35) der Schwenkarm (13) die Spannrolle (21) drehfederbelastet gegen den Riemen (29) in eine vorgesehene Betriebsposition drängt; und/oder
- die Arretiervorrichtung (31) konfiguriert ist, um mittels eines der Rastmittel (33, 35) und der Rastausnehmung (37) den Schwenkarm (13) bei einem Fortfall der Drehfederlast in einer zweiten Rastposition zu arretieren, und/oder
- die Arretiervorrichtung (1) konfiguriert ist, um bei einem Fortfall der Belastung der Spannrolle (21) seitens des Riemens (29), mittels eines der Rastmittel (33, 35) und der Rastausnehmung (37) den Schwenkarm in einer dritten Rastposition zu arretieren.

8. Verfahren zur Ausführung mit einer Riemenspannvorrichtung (1) nach einem der Ansprüche 1 bis 5 oder einem Riementrieb (3) nach einem der Ansprüche 6 und 7,
**dadurch gekennzeichnet, dass**
- in einem ersten Schritt der Schwenkarm (13) aus einer Ruhestellung, in welcher die Drehfederlast minimal ist, in eine erste Schwenkstellung unter Zunahme der Drehfederlast verschwenkt wird, wobei in der ersten Schwenkstellung die Arretiervorrichtung (31) so konfiguriert wird, dass das erste (33) und das zweite (35) Rastmittel an der Rastausnehmung (37) verrastet, mithin eine erste Rastposition eingenommen wird.

9. Verfahren nach Anspruch 8,
**dadurch gekennzeichnet, dass**
- in einem zweiten Schritt die Arretiervorrichtung (31) so konfiguriert wird, dass das erste Rastmittel (33) nachfolgend aus der Rastausnehmung (37) ausgerastet wird, womit die Betriebstellung des Schwenkarms (13) eingenommen wird, insbesondere derart, dass weder das erste (33) noch das zweite (35) Rastmittel an der Rastausnehmung (37) arretieren.

10. Verfahren nach Anspruch 9,
**dadurch gekennzeichnet, dass**
- das erste Rastmittel (33) in dem zweiten Schritt nach dem Ausrasten in eine Sperrstellung verbracht wird, in welcher ein selbsttätiges Verrasten an der Rastausnehmung (37) unabhängig von einer Schwenkstellung des Schwenkarms (13) verunmöglicht ist.

11. Brennkraftmaschine,
**gekennzeichnet durch**
- eine Riemenspannvorrichtung (1) nach einem der Ansprüche 1 bis 5; und/oder
- einen Riementrieb (3) nach einem der Ansprüche 6 und 7.

## Claims

1. A belt-tensioning device (1), in particular for an internal combustion engine, with:
- a pivoting arm (13) supported on a bearing housing (5) of the belt-tensioning device (1) under the load of a torsion spring, wherein a tensioning roller (21) is further arranged on the pivoting arm (13), **characterised by**
- a locking device (31) formed by means of a first (33) and a second (35) latching means on the pivoting arm (13) as well as a latching recess (37) cooperating therewith on the bearing housing (5), wherein the locking device (31) is configured such that the pivoting arm (13) can be locked by means of the locking device (31) in different predetermined latching positions and can be pivoted with a predetermined free space in an operating position.

2. The belt-tensioning device (1) according to claim 1,
**characterised in that**
- the locking device (31) is configured such that, for locking in the different predetermined latching positions of the pivoting arm (13), the first as well as the second latching means (35) can be latched in the latching recess (37).

3. The belt-tensioning device (1) according to any one of the preceding claims,
**characterised in that**
- the first (33) and the second (35) latching means are arranged on a fixture (39) on the pivoting arm (13) one adjacent to the other in the pivoting direction, wherein the latching recess (37) also extends in the pivoting direction, particularly in the form of an elongated hole.

4. The belt-tensioning device (1) according to any one of the preceding claims,
**characterised in that**
- the first latching means (33) is formed by means of a spring-loaded latching pin (43) and a housing (45), in particular such that the first latching means (33) can be brought into a first position, in which first position the latching pin (43) can emerge from the housing (45) under spring load on a latching side of the housing (45), and the first latching means (33) can further be brought into a second position in which the latching pin (43) cannot emerge on the latching side of the housing (45).

5. The belt-tensioning device (1) according to any one of the preceding claims,
**characterised in that**
- the second latching means (35) is a blocking screw.

6. A belt drive (3) with a belt-tensioning device (1) according to any one of the preceding claims, in particular for a fan of an internal combustion engine, wherein the belt drive (3) has a belt (29), wherein the tensioning roller (21) is provided to be urged against the belt (29), thereby tensioning it, by means of the pivoting arm (13) loaded by the torsion spring.

7. The belt drive (3) according to claim 6,
**characterised in that**
- the locking device (31) is configured to lock the pivoting arm (13) in a predetermined first pivoting position by means of the latching means (33, 35) and the latching recess (37), from which, when the locking is released by the latching means (33, 35), the pivoting arm (13) urges the tensioning roller (21) against the belt (29) into a provided operational position under the load of the torsion spring; and/or
- the locking device (31) is configured to lock the pivoting arm (13) in a second latching position by means of one of the latching means (33, 35) and the latching recess (37) when the load of the torsion spring is removed, and/or
- the locking device (1) is configured to lock the pivoting arm in a third latching position by means of one of the latching means (33, 35) and the latching recess (37) when the load of the tensioning roller (21) on the side of the belt (29) is removed.

8. A method to be executed with a belt-tensioning device (1) according to any one of claims 1 to 5 or a belt drive (3) according to any one of claims 6 and 7,
**characterised in that**
- in a first step, the pivoting arm (13) is pivoted from a resting position, in which the load of the torsion spring is minimal, into a first pivoting position with increasing load of the torsion spring, wherein, in the first pivoting position, the locking device (31) is configured such that the first (33) and the second (35) latching means are latched in the latching recess (37), thus taking a first latching position.

9. The method according to claim 8,
**characterised in that**
- in a second step, the locking device (31) is configured such that the first latching means (33) is subsequently released from the latching recess (37), thereby taking the operation position of the pivoting arm (13), in particular such that neither the first (33) nor the second (35) latching means are locking in the latching recess (37).

10. The method according to claim 9,
**characterised in that**
- in the second step, the first latching means (33) is brought into a blocking position after its release, in which an automatic latching in the latching recess (37) is made impossible independently from a pivoting position of the pivoting arm (13).

11. An internal combustion engine,
**characterised by**
- a belt-tensioning device (1) according to any one of claims 1 to 5; and/or
- a belt drive (3) according to any one of claims 6 and 7.

## Revendications

1. Dispositif tendeur de courroie (1), notamment pour un moteur à combustion interne, avec :
- un bras pivotant (13) supporté de manière chargée par ressort de torsion sur un logement de palier (5) du dispositif tendeur de courroie (1), dans lequel un galet-tendeur (21) est en outre disposé sur le bras pivotant (13), **caractérisé par**
- un dispositif d'arrêt (31), formé par l'intermédiaire d'un premier (33) et un second (35) moyen de verrouillage sur le bras pivotant (13) ainsi qu'une encoche d'arrêt (37) coopérant avec ceux-ci sur le logement de palier (5), dans lequel le dispositif d'arrêt (31) est configuré de telle manière que le bras pivotant (13) peut être arrêté par l'intermédiaire de dispositif d'arrêt (31) dans différentes positions d'arrêt prédéterminées, et peut être pivoté dans une position de fonctionnement avec un espace libre prédéterminé.

2. Dispositif tendeur de courroie (1) selon la revendication 1,
**caractérisé en ce que**
- le dispositif d'arrêt (31) est configuré de telle manière que le premier et aussi le second moyen de verrouillage (35) peuvent être verrouillés sur l'encoche d'arrêt (37) pour l'arrêt dans les différentes positions d'arrêt prédéterminées du bras pivotant (13).

3. Dispositif tendeur de courroie (1) selon l'une quelconque des revendications précédentes,
**caractérisé en ce que**
- le premier (33) et le second (35) moyen de verrouillage sont disposés au niveau d'un support (39) sur le bras pivotant (13) adjacents l'un à l'autre dans la direction de pivotement, l'encoche d'arrêt (37) s'étendant aussi dans la direction de pivotement, notamment sous forme de trou oblong.

4. Dispositif tendeur de courroie (1) selon l'une quelconque des revendications précédentes,
**caractérisé en ce que**
- le premier moyen de verrouillage (33) est formé par une broche d'arrêt (43) chargée par ressort et un boîtier (45), notamment de telle manière que le premier moyen de verrouillage (33) peut être mis dans une première position dans laquelle la broche d'arrêt (43) peut sortir du boîtier (45) sous le charge du ressort sur un côté d'arrêt du boîtier (45), et que le premier moyen de verrouillage (33) peut en outre être mis dans une seconde position dans laquelle la broche d'arrêt (43) ne peut pas sortir sur le côté d'arrêt du boîtier (45).

5. Dispositif tendeur de courroie (1) selon l'une quelconque des revendications précédentes,
**caractérisé en ce que**
- le second moyen de verrouillage (35) est une vis de blocage.

6. Entraînement à courroie (3) avec un dispositif tendeur de courroie (1) selon l'une quelconque des revendications précédentes, notamment pour un ventilateur d'un moteur à combustion interne, dans lequel l'entraînement à courroie (3) présente une courroie (29), dans lequel le galet-tendeur (21) est prévu pour être poussé contre la courroie (29) en la tendant par l'intermédiaire du bras pivotant (13) chargé par ressort de torsion.

7. Entraînement à courroie (3) selon la revendication 6,
**caractérisé en ce que**
- le dispositif d'arrêt (31) est configuré pour arrêter le bras pivotant (13) dans une première position de pivotement prédéterminée par l'intermédiaire des moyens de verrouillage (33, 35) et l'encoche d'arrêt (37), à partir de laquelle, avec le déverrouillage de l'arrêt par les moyens de verrouillage (33, 35), le bras pivotant (13) pousse le galet-tendeur (21) sous la charge du ressort de torsion contre la courroie (29) dans une position de fonctionnement prévue ; et/ou
- le dispositif d'arrêt (31) est configuré pour arrêter le bras pivotant (13) dans une deuxième position d'arrêt par l'intermédiaire d'un des moyens de verrouillage (33, 35) et de l'encoche d'arrêt (37) lorsque la charge du ressort de torsion cesse, et/ou
- le dispositif d'arrêt (1) est configuré pour arrêter le bras pivotant dans une troisième position d'arrêt par l'intermédiaire d'un des moyens de verrouillage (33, 35) et de l'encoche d'arrêt (37) lorsque la charge du galet-tendeur (21) sur le côté de la courroie (29) cesse.

8. Procédé pour l'exécution avec un dispositif tendeur de courroie (1) selon l'une quelconque des revendications 1 à 5 ou avec un entraînement à courroie (3) selon l'une quelconque des revendications 6 et 7,
**caractérisé en ce que**
- dans une première étape, le bras pivotant (13) est pivoté d'une position de repos, dans laquelle la charge du ressort de torsion est minimale, dans une première position de pivotement en augmentant la charge du ressort de torsion, le dispositif d'arrêt (31) étant configuré dans la première position de pivotement de telle manière que le premier (33) et le second (35) moyens de verrouillage s'arrêtent sur l'encoche d'arrêt (37), ainsi prenant une première position d'arrêt.

9. Procédé selon la revendication 8,
**caractérisé en ce que**
- dans une seconde étape, le dispositif d'arrêt (31) est configuré de telle manière que le premier moyen de verrouillage (33) est ensuite déclenché de l'encoche d'arrêt (37), ainsi prenant la position de fonctionnement du bras pivotant (13), notamment de telle manière que ni le premier (33) ni le second (35) moyen de verrouillage ne s'arrêtent sur l'encoche d'arrêt (37).

10. Procédé selon la revendication 9,
**caractérisé en ce que**
- dans la seconde étape, après du déblocage, le premier moyen de verrouillage (33) est mis dans une position de blocage dans laquelle le verrouillage automatique sur l'encoche d'arrêt (37) est rendu impossible, indépendamment d'une position de pivotement du bras pivotant (13).

11. Moteur à combustion interne,
**caractérisé par**
- un dispositif tendeur de courroie (1) selon l'une quelconque des revendications 1 à 5 ; et/ou
- un entraînement à courroie (3) selon l'une quelconque des revendications 6 et 7.
